# EUROPÄISCHE PATENTSCHRIFT

(11) **EP 1 270 324 B1**
(45) Veröffentlichungstag und Bekanntmachung des Hinweises auf die Patenterteilung: **01.10.2008**
(21) Anmeldenummer: 02012783.3
(22) Anmeldetag: 10.06.2002
(51) Int. Cl.: B60Q 1/08, F21S 8/10, G01S 7/00, F21W 101/10, F21Y 101/02

(54) **Fahrzeugscheinwerfer**
Vehicle headlamp
Projecteur pour véhicule

(30) Priorität: 20.06.2001 DE 10129743
(43) Veröffentlichungstag der Anmeldung: 02.01.2003
(73) Patentinhaber: Daimler AG, 70327 Stuttgart (DE)
(72) Erfinder: Weidel, Edgar, 89250 Senden (DE)

(56) Entgegenhaltungen:
- EP-A- 0 455 524
- EP-A- 0 860 805
- EP-A- 1 024 539
- WO-A-00/36336
- WO-A-01/01038
- WO-A-02/04247
- DE-A1- 4 228 895
- DE-A1- 10 009 782
- FR-A- 2 730 035
- US-A- 5 803 579

## Beschreibung

Die Erfindung betrifft einen Fahrzeugscheinwerfer.

Schlechte Sicht bei Nacht ist eine anstrengende und gefährliche Situation, die von vielen Fahrern gefürchtet wird. Als Folge der schlechten Sicht ist die Unfallhäufigkeit nachts deutlich höher als bei Fahrten bei Tag und guter Sicht. Insbesondere treten bei Nacht folgende Schwierigkeiten auf:
- Die Sichtweite mit Abblendlicht bei Gegenverkehr ist gering und wird von vielen Fahrern falsch eingeschätzt. Das führt zu einem späten Erkennen von unbeleuchteten Hindernissen, Fußgängern, Radfahrern ohne Licht und von Tieren und damit zu Unfällen.
- Durch die Scheinwerfer entgegenkommender Fahrzeuge und deren Reflexe vor allem bei nasser Fahrbahn wird der Fahrer geblendet, der Fahrer fährt kurzzeitig in ein schwarzes Loch. Besonders gefährdet sind nachtblinde und ältere Fahrer wegen ihrer geringeren Sehleistung.
- Bei Regen, Nebel und Schneetreiben können die Sichtverhältnisse nochmals deutlich schlechter sein.

Um Verkehrsszenen bei Nacht möglichst gut ausleuchten zu können, gibt es Fahrzeugscheinwerfer, deren Leuchtcharakteristik an den Straßenverlauf angepasst werden kann. Diese Scheinwerfer können motorisch in der Vertikalen gekippt werden, um unterschiedliche Beladungszustände auszugleichen oder Kuppen oder Mulden vor dem Fahrzeug auszuleuchten, beziehungsweise in der Horizontalen geschwenkt werden, um Kurven auszuleuchten. Die dazu nötige Mechanik ist sehr aufwendig und störanfällig, und als Alternative bleibt nur die Möglichkeit, unterschiedliche Typen von Scheinwerfern vorzusehen, zwischen denen umgeschaltet werden kann. Entsprechende Sonderscheinwerfer kann man auch verwenden, um zum Beispiel eine bei Nebel oder Schneefall vorteilhafte breitere und abgesenktere Beleuchtung zu erzeugen. Aus Design- und Kostengründen ist es aber häufig unerwünscht, ein Fahrzeug mit übermäßig vielen Scheinwerfern auszurüsten.

Eine weitere Verbesserung der Sicht bei Nacht wird durch ein optoelektronisches System erreicht, das in der DE 40 07 646 A1 dargelegt ist. Das System nimmt ein Videobild einer Verkehrsszene auf und stellt es dem Fahrer geeignet dar. Das dargestellte Bild enthält zusätzliche Informationen, die der Fahrer mit seinen eigenen Augen nicht oder nur mit Mühe erfassen kann, insbesondere bei Dunkelheit, schlechter Witterung und Nebel.

Das System enthält zusätzlich zu den normalen Scheinwerfern zwei Infrarotscheinwerfer, die im nahen Infrarot emittierende Laserdioden als Lichtquelle nutzen. Die Laserdioden werden gepulst betrieben. Eine CCD-Kamera zur Aufnahme des Videobildes ist im Dachbereich des Fahrzeuges untergebracht. Die CCD-Kamera besitzt einen elektronischen Verschluss, der mit den Laserdioden synchronisiert ist. Vor dem Kameraobjektiv ist ein optisches Bandpassfilter angebracht. Das Videobild wird dem Fahrer auf einem LCD-Display gezeigt. Das Verwenden von Laserlicht hat eine Reihe von Vorteilen:

Die Laser emittieren bei einer Wellenlänge von 810 nm im nahen Infrarot. Da das infrarote Licht für das menschliche Auge nahezu nicht sichtbar ist, kann permanent aufgeblendet beleuchtet werden.

Durch Verwenden von Laserlicht kann die Blendung der Kamera durch die sichtbaren Scheinwerfer entgegenkommender Fahrzeuge erheblich reduziert werden. Zum einen weist das Laserlicht nur eine spektrale Breite von wenigen nm auf, während sichtbare Lichtquellen wie Halogenlampen mehrere hundert nm breit sind. Bringt man ein optisches Filter mit einer schmalen Durchlassbreite vor das Kameraobjektiv, so wird nahezu das gesamte Laserlicht transmittiert, während das Licht entgegenkommender Fahrzeuge um einen Faktor 50 bis 100 geschwächt wird. Zum Anderen folgen Laserdioden dem Treiberstrom unmittelbar, sie können auf einfache Weise schnell gepulst werden. Verwendet man eine Videokamera mit einem schnellen elektronischen Verschluss, der mit den Lasern synchronisiert ist, so kann das Licht entgegenkommender Fahrzeuge weiter reduziert werden.

In der genannten Druckschrift wird außerdem vorgeschlagen, die Helligkeit der Beleuchtung abhängig vom Abstrahlwinkel zu variieren, zum Beispiel um den Vordergrund einer Verkehrsszene weniger hell zu beleuchten als den Hindergrund. Damit kann die mit der Entfernung geringer werdende Flächenhelligkeit des Laserlichts kompensiert und eine gleichmäßigere Ausleuchtung der Szene erreicht werden. Speziell wird ein Laserstrahl in einer Raumrichtung durch einen Kippspiegel hin- und hergeschwenkt und in einer dazu senkrechten Raumrichtung entweder gleichmäßig aufgeweitet oder ebenfalls schnell geschwenkt, um die zu beleuchtende Verkehrsszene aufeinander folgend abzutasten, und die Intensität des Laserlichtes wird synchron mit der Bewegung des Kippspiegels variiert. An die nötige Mechanik für das Schwenken des Spiegels sind aber hohe Anforderungen gestellt, die im Falle eines Fahrzeuges nicht leicht zu erfüllen sind. Die Reaktionszeiten sind zwar kürzer als bei einer rein mechanischen Schwenkung von konventionellen Scheinwerfern, aber dennoch begrenzt.

Der internationalen Patentanmeldung WO 01/01038 A1 ist ein Fahrzeugscheinwerfer zu entnehmen, der ein zweidimensionales Array aus einer Vielzahl von elektronischen Leuchtelementen aufweist, die bedarfsabhängig zu- oder abgeschaltet werden und die jeweils stark unterschiedliche räumliche Verteilungen und unterschiedliche spektrale Charakteristiken haben. Durch diese bedarfsabhängige Ansteuerung durch die Ansteuerelektonik ist eine sehr starke divergente Strahlverteilung realisiert.

Weiterhin ist aus der vorangemeldeten und nachveröffentlichten internationalen Patentanmeldung WO 02/04247 A1 ein Fahrzeugscheinwerfer bekannt, der mehrere Leuchtelemente aufweist, die dafür eingerichtet sind, eine Vielzahl von zueinander parallelen Lichtbündeln zu emittieren, und der eine Sammellinse aufweist, um das Licht vom Array zu empfangen.

Der Erfindung liegt die Aufgabe zugrunde, einen Fahrzeugscheinwerfer mit veränderlicher Leuchtcharakteristik zu schaffen, der mechanisch besonders einfach aufgebaut, störungssicher und äußerst reaktionsschnell ist und dabei eine definierte Ausleuchtcharakteristik mit begrenzter Divergenz zeigt.

Diese Aufgabe löst ein Fahrzergscheinwafer nach Anspruch 1 oder nach Anspruch 7.

Mit der Erfindung kann die Leuchtcharakteristik des Scheinwerfers allein mit Hilfe der Ansteuerelektronik an veränderliche Fahrbetriebs- oder Umgebungsbedingungen angepasst werden. Es sind keinerlei mechanisch bewegte Teile notwendig, und man benötigt nur eine Scheinwerferoptik.

Die Erfindung kann bei einem Nachtsichtsystem verwendet werden, wie es in der erwähnten DE 40 07 646 A1 beschrieben ist, vorzugsweise indem der Scheinwerfer mit LEDs oder Laserdioden bestückt wird, die im nahen Infraroten emittieren. Die Erfindung kann aber auch als Fahrzeugscheinwerfer für sichtbares Licht verwendet werden, vorzugsweise indem der Scheinwerfer mit Weißlicht-LEDs oder -Laserdioden bestückt wird. So ein Fahrzeugscheinwerfer kann je nach Ansteuerung der Leuchtelemente Fernlicht oder Abblendlicht sowie eine Vielzahl von weiteren Beleuchtungscharakteristiken erzeugen. Es ist sogar eine kombinierte Anwendung als Scheinwerfer mit veränderlicher Leuchtcharakteristik sowohl für sichtbares als auch für unsichtbares Licht möglich, indem der Scheinwerfer mit verschieden emittierenden Leuchtelementen bestückt wird.

Die Lichtbündel der einzelnen Leuchtelemente haben nach Austritt aus der Sammellinse eine bestimmte, bei der Anwendung als Fahrzeugscheinwerfer erwünschte Divergenz, aufgrund derer sie sich in einiger Entfernung überlappen. Falls die konstruktionsbedingte Divergenz so klein ist, dass nahe Objekte in einem unerwünschten Streifenmuster erscheinen würden, kann man einen Diffuser vorsehen, der die Lichtbündel geeignet spreizt. Der Diffuser wird vorzugsweise nahe an der Sammellinse auf deren Lichtaustrittseite angeordnet oder in die Sammellinse integriert.

In einer bevorzugten Ausführungsform wählt die Ansteuerelektronik die Leuchtelemente, die leuchten gelassen werden, in Abhängigkeit von sensorisch gewonnenen Daten über Fahrbetriebsoder Umgebungsbedingungen aus. Entsprechende Sensoren sind zum Beispiel Sensoren, die den Einfederweg der einzelnen Räder messen, Kurvensensoren, Sensoren für Sicht-, Witterungs- und Straßenbeleuchtungsverhältnisse in der Fahrzeugumgebung und viele andere mehr. Da die Erfindung ohne jede bewegte Mechanik auskommt, kann eine Anpassung an die erfassten Fahrbetriebsoder Umgebungsbedingungen praktisch beliebig schnell erfolgen, so dass diese selbst dann kompensiert werden können, wenn sie sich zeitlich sehr schnell ändern.

Die einzelnen Leuchtelemente können z.B. durch einfaches Einund Ausschalten aktiviert bzw. deaktiviert werden, wobei Zwischenhelligkeiten dadurch eingestellt werden können, dass z.B. nur jedes zweite Leuchtelement aktiviert wird. Zwischenhelligkeiten können aber auch dadurch erzeugt werden, dass die Ansteuerelektronik einige oder alle Leuchtelemente mit einem geringeren Ansteuerstrom als dem Nennstrom versorgt. In Sonderfällen, etwa wenn Sensoren im Fahrzeug bei schlechten Beleuchtungsverhältnissen eine außergewöhnliche Gefahrensituation registrieren, kann die Ansteuerelektronik die Leuchtelemente oder auch nur diejenigen, die einen Sektor beleuchten, in dem die Gefahrensituation registriert wird, sogar mit einem Überstrom versorgen, um die Situation dem Fahrer noch deutlicher zu machen, ohne dass die Gesamt-Lebensdauer der Leuchtelemente nennenswert darunter leidet.

In der bevorzugten Ausführungsform ist der erfindungsgemäße Fahrzeugscheinwerfer ein Frontscheinwerfer.

In der Ausführungsform nach Anspruch 7 enthält der Fahrzeugscheinwerfer mehrere zweidimensionale Arrays, die jeweils eine Vielzahl von elektronischen Leuchtelementen enthalten, die dafür eingerichtet sind, eine Vielzahl von zueinander parallelen Lichtbündeln zu emittieren, wobei das von jedem Array ausgesandte Licht eine Wellenlänge hat, die von derjenigen des Lichtes des oder der anderen Arrays verschieden ist, und wobei die mehreren Arrays so angeordnet sind, dass sich ihre jeweiligen Lichtbündel in einem Strahlkombinierer (einem umgedrehten Strahlteiler) treffen, der die Lichtbündel aller Arrays parallel auf eine gemeinsame Sammellinse richtet, sowie eine Ansteuerelektronik für die Leuchtelemente, die dafür eingerichtet ist, die Leuchtelemente einzeln oder gruppenweise selektiv leuchten zu lassen.

Auf diese Weise kann zum Beispiel eines der Arrays infrarotes Licht erzeugen, und die übrigen Arrays können sichtbares Licht erzeugen. Alternativ oder zusätzlich können zwei oder mehr Arrays sichtbares monochromes Licht mit jeweils verschiedenen Wellenlängen emittieren, die zusammen Weißlicht ergeben. In beiden Fällen benötigt man nur eine Sammellinse, weshalb das Volumen des Scheinwerfers klein gemacht werden kann.

Weitere Merkmale und Vorteile der Erfindung ergeben sich aus den Unteransprüchen und aus der folgenden Beschreibung von Ausführungsbeispielen anhand der Zeichnung. In der Zeichnung zeigen:
Fig. 1 eine Seitenansicht eines Fahrzeugscheinwerfers nach Anspruch 1 mit Leuchtelemente-Array,
Fig. 2 eine Ansicht des Fahrzeugscheinwerfers von oben, und
Fig. 3 ein Ausführungsbeispiel für einen Fahrzeugscheinwerfer nach Anspruch 7 mit mehreren Leuchtelemente-Arrays.

Als Lichtquelle kann ein flächiges Array von Laserdioden - vorzugsweise oberflächenemittierende Laser, sogenannte VCSELs - oder ein Array aus dichtgepackten einzelnen LEDs eingesetzt werden; beide Typen werden im Folgenden unter der Bezeichnung Diodenarray zusammengefasst.

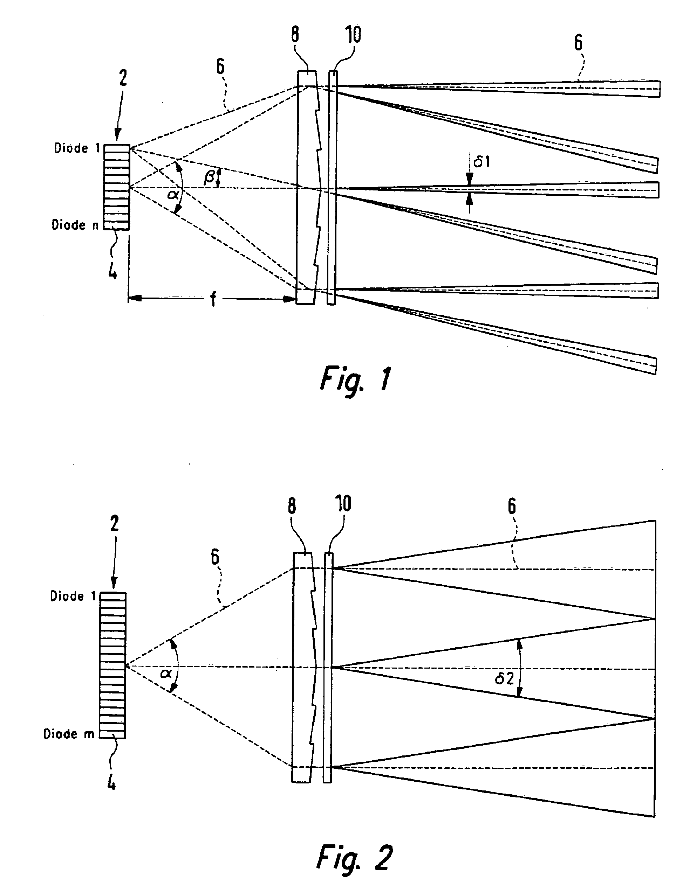

Das Diodenarray 2 ist in dem gezeigten Beispiel eine zweidimensionale ebene regelmäßige Anordnung aus n Dioden 4 in vertikaler Richtung (Fig. 1) und m Dioden 4 in horizontaler Richtung (Fig. 2). Das heißt, insgesamt n x m Dioden 4 sind in einem rechteckigen Feld mit n Zeilen und m Spalten angeordnet. Die Anordnung muss aber nicht rechteckig sein, sondern sie kann z.B. auch elliptisch oder halbelliptisch sein, je nachdem, welche Bereiche vor einem Fahrzeug, in dem der Scheinwerfer eingebaut ist, beleuchtbar sein sollen.

Die Dioden 4 werden von einer nicht gezeigten Ansteuerschaltung mit Strom versorgt, die es ermöglicht, die Dioden 4 wahlweise einzeln oder in vorbestimmten Gruppen mit einer gewünschten Intensität leuchten zu lassen.

Das Diodenarray 2 ist mit einem nicht gezeichneten Kühlkörper an der Rückseite des Scheinwerfers verbunden. Das Licht jeder einzelnen Diode 4 weitet mit einem Winkel α von beispielsweise 10° sowohl vertikal als auch horizontal auf. Von einzelnen Dioden 4 ausgehende Lichtstrahlen sind in Figuren 1 und 2 punktiert eingezeichnet. Der Übersichtlichkeit halber sind in Fig. 1 nur Strahlen von zwei Dioden 4 und in Fig. 2 nur von einer Diode 4 ausgehende Strahlen eingezeichnet; ferner sind nur der zentrale Strahl und die Randstrahlen der von den einzelnen Dioden 4 ausgehenden Lichtbündel 6 eingezeichnet.

Das Diodenarray 2 ist im Brennpunkt einer Sammellinse 8 angebracht. Zugunsten einer übersichtlichen Darstellung sind das Diodenarray 2 und die Sammellinse 8 so nahe beieinander gezeichnet, dass der Winkel α in den Figuren wesentlich größer erscheint als er normalerweise ist.

Die Sammellinse 8 kann eine einfache Linse, eine Plankonvexlinse, eine Fresnellinse oder eine asphärische Linse sein. Die Sammellinse 8 kollimiert das divergierende Lichtbündel 6 jeder Diode 4. Nach Austritt aus der Sammellinse 6 werden die Lichtbündel 6 eine nicht eingezeichnete Divergenz δ aufweisen, die durch die Größe der Lichtaustrittsfläche einer einzelnen Diode 4, durch Beugung und durch die Form der Sammellinse 8 bedingt ist.

In vertikaler Richtung (Fig. 1) wird diese Divergenz δ durch einen Diffuser 10 zu einer Divergenz δ1 vergrößert. δ1 sollte so groß sein, dass sich die Lichtbündel 6 benachbarter Dioden 4 überlappen und bei geeigneter elektrischer Ansteuerung der Dioden 4 die gewünschte Winkelverteilung des Lichtbündels 6 entsteht. Der maximal ausleuchtbare vertikale Winkelbereich ist nach Fig. 1 durch 2β gegeben und wird durch den Abstand der außen liegenden Dioden 4 dividiert durch die Brennweite f der Sammellinse 8 gegeben.

In horizontaler Richtung kann nach Fig. 2 eine von δ1 abweichende Divergenz δ2 erhalten werden, nämlich durch entsprechende Auslegung des Diffusers 10 und/oder aufgrund einer nicht kreissymmetrischen Abstrahlcharakteristik der Dioden 4.

Als Diffuser 10 kann entweder ein holographischer Diffuser oder ein Diffuser mit Mikrolinsen oder Mikrokeilen verwendet werden. Der Diffuser 10 kann refraktiv und/oder diffraktiv wirken. In einer weiteren, nicht dargestellten Bauform kann der Diffuser 10 in die Sammellinse 8 integriert sein.

Der Diffuser 10 formt aus den ankommenden kollimierten Lichtbündeln 6 die gewünschte Scheinwerferverteilung. Falls die Divergenz δ der aus der Sammellinse 8 austretenden Lichtbündel 6 groß genug ist, kann auf den Diffuser 10 auch verzichtet werden.

Die durch den Scheinwerfer abgestrahlte Winkelverteilung des Lichts kann nun in weiten Grenzen geformt und zeitlich sehr schnell geändert und angepasst werden, und zwar durch elektronische Ansteuerung von einzelnen Dioden 4 oder Gruppen von vertikaler bzw. horizontaler Richtung werden nachfolgend beschrieben.
A) In vertikaler Richtung
   1) Werden alle Diodenzeilen angesteuert, erhält man gleichzeitig Fernlicht und Abblendlicht.
   2) Werden nur die Diodenzeilen n/2 bis n (d.h. die untere Hälfte der Dioden 4 in Fig. 1) angesteuert, so erhält man nur Abblendlicht.
   3) Allgemeiner kann die vertikale Lichtverteilung durch die Stromstärke, mit der die einzelnen Diodenzeilen angesteuert werden, variiert und optimiert werden.
   4) Ein Verkippen des Fahrzeuges durch schwere Zuladung oder Nickbewegungen während der Fahrt bei Unebenheiten der Fahrbahn kann durch Messen der Einfederung der einzelnen Räder und mit einem daraus abgeleiteten Regelsignal für den Ansteuerstrom der Diodenzeilen dynamisch ausgeglichen werden. Diese Regelung kann so schnell sein, dass keine Änderung der Ausleuchtung auch bei starken Unebenheiten wahrnehmbar ist. Damit ist eine gleichmäßig optimale Ausleuchtung der Fahrbahn zu erreichen.
B) In horizontaler Richtung

In analoger Weise kann in horizontaler Richtung durch Ansteuerung geeigneter Gruppen von Dioden 4 die horizontale Lichtverteilung eingestellt und optimiert werden. Die Verteilung kann breiter oder schmaler gewählt werden, und das Maximum kann zu einer Seite geschwenkt werden, um in Kurven hineinzuleuchten. Auch diese Variationen werden durch eine Änderung des Diodenstroms erreicht.

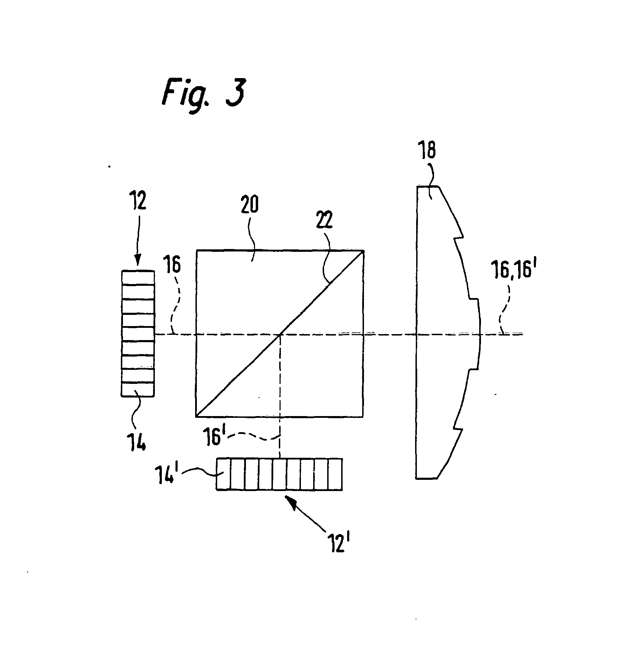

Fig. 3 zeigt einen Fahrzeugscheinwerfer, der zwei zweidimensionale Diodenarrays 12, 12' enthält, die jeweils eine Vielzahl von Leuchtdioden 14, 14' enthalten. Die Dioden 14, 14' emittieren im Betrieb jeweils eine Vielzahl von zueinander parallelen Lichtbündeln 16, 16', von denen in Fig. 3 jeweils nur der zentrale Strahl eingezeichnet ist. Die Diodenarrays 12, 12' sind senkrecht zueinander angeordnet, so dass sich ihre Lichtbündel 16, 16' in einem Strahlteiler 20 treffen, der die Lichtbündel 16, 16' der beiden Diodenarrays 12, 12' parallel auf eine gemeinsame Sammellinse 18 richtet. Das heißt, der Strahlteiler 20 wird hier als Strahlkombinierer verwendet. Ferner kann ein hier nicht eingezeichneter Diffuser wie in Fig. 1 vorgesehen sein.

Zum Beispiel sind die Lichtbündel 16 sichtbares Licht mit einer bestimmten Wellenlänge λ₁ und sind die Lichtbündel 16' sichtbares Licht mit einer bestimmten Wellenlänge λ₂, die von λ₁ verschieden ist, wobei λ₁ und λ₂ auf der Normfarbtafel auf einer Geraden durch den Unbuntpunkt liegen. Dadurch erscheint das durch den Strahlteiler 20 vereinigte Licht für das menschliche Auge wie Weißlicht, und man kann mit nur einer Sammellinse 18, die normalerweise einen erheblichen Teil des Scheinwerfervolumens einnimmt, unter Verwendung von monochromen Leuchtdioden einen Weißlichtscheinwerfer erzeugen.

Alternativ kann eine der Wellenlängen λ₁ und λ₂ im infraroten Bereich liegen, so dass man mit nur einer Sammellinse 18 einen kombinierten Infrarot- und Fahrlichtscheinwerfer erhält.

Wenn man in diesem Fall auch für das Fahrlicht monochrome Leuchtdioden verwenden will, benötigt man mindestens ein weiteres Diodenarray, das in Fig. 3 nicht eingezeichnet ist, und einen Strahlteiler, der das Licht aller Diodenarrays vereinigt.

In dem Beispiel von Fig. 3 enthält der Strahlteiler 20 eine dielektrische Spiegelschicht 22, die für λ₁ hochreflektierend und für λ₂ durchlässig ist. So ein Strahlteiler, insbesondere seine dielektrische Schicht, lässt sich leichter herstellen, wenn die Einfallswinkel der beiden Lichtbündelgruppen kleiner als 45° sind. Spitzere Einfallswinkel erleichtern es auch, mehr als zwei Lichtbündelgruppen zu vereinigen. Entsprechende Strahlteiler gibt es zum Beispiel für Farb-CCD-Kameras mit drei CCD-Elementen für die verschiedenen Farben, die für eine Verwendung bei einem Fahrzeugscheinwerfer allerdings umgekehrt durchstrahlt werden.

Die Dioden 14, 14' der Diodenarrays 12, 12' werden ähnlich wie weiter oben beschrieben entweder von einer gemeinsamen oder von mehreren getrennten Ansteuerschaltungen entsprechend dem jeweiligen Beleuchtungsziel selektiv mit Strom versorgt.

## Patentansprüche

1. Fahrzeugscheinwerfer, enthaltend ein zweidimensionales Array (2) aus einer Vielzahl von elektronischen Leuchtelementen (4), und eine Ansteuerelektronik für die Leuchtelemente, die dafür eingerichtet ist, die Leuchtelemente (4) einzeln oder gruppenweise selektiv leuchten zu lassen, wobei die Leuchtelemente (4), dafür eingerichtet sind, eine Vielzahl von zueinander parallelen Lichtbündeln (6) zu emittieren, wobei der Fahrzeugscheinwerfer eine Sammellinse (8) enthält, die im Abstand ihrer Brennweite im wesentlichen parallel zu der Fläche des Arrays angeordnet ist, um das Licht von dem Array zu empfangen

2. Fahrzeugscheinwerfer nach Anspruch 1, **dadurch gekennzeichnet, dass** die Leuchtelemente (4) infrarotes Licht emittieren.

3. Fahrzeugscheinwerfer nach Anspruch 1, **dadurch gekennzeichnet, dass** die Leuchtelemente (4) sichtbares Licht emittieren.

4. Fahrzeugscheinwerfer nach Anspruch 1, **dadurch gekennzeichnet, dass** einige der Leuchtelemente (4) infrarotes Licht und die übrigen Leuchtelemente sichtbares Licht emittieren.

5. Fahrzeugscheinwerfer nach einem der vorhergehenden Ansprüche, **dadurch gekennzeichnet, dass** die Leuchtelemente (4) Laserdioden sind.

6. Fahrzeugscheinwerfer nach einem der Ansprüche 1 bis 4, **dadurch gekennzeichnet, dass** die Leuchtelemente (4) LEDs sind.

7. Fahrzeugscheinwerfer enthaltend ein zweidimensionales Array (2) aus einer Vielzahl von elektronischen Leuchtelementen (4), und eine Ansteuerelektronik für die Leuchtelemente, die dafür eingerichtet ist, die Leuchtelemente (14, 14') einzeln oder gruppenweise selektiv leuchten zu lassen, wobei der Fahrzeugscheinwerfer wenigsten ein weiteres vom ersten zweidimensionales Array räumlich getrenntes zweidimensionales Array (12, 12') enthält,
wobei die mehreren Arrays jeweils eine Vielzahl von elektronischen Leuchtelementen (14, 14') enthalten, die dafür eingerichtet sind, eine Vielzahl von zueinander parallelen Lichtbündeln (16, 16') zu emittieren,
wobei das von jedem Array ausgesandte Licht eine Wellenlänge hat, die von derjenigen des Lichtes des oder der anderen Arrays verschieden ist,
und wobei die mehreren Arrays so angeordnet sind, dass sich ihre jeweiligen Lichtbündel in einem Strahlkombinierer (20) treffen, der die Lichtbündel aller Arrays parallel auf eine gemeinsame Sammellinse (18) richtet.

8. Fahrzeugscheinwerfer nach Anspruch 7, **dadurch gekennzeichnet, dass** eines der Arrays (12) infrarotes Licht emittiert und dass die übrigen Arrays (12') sichtbares Licht emittieren.

9. Fahrzeugscheinwerfer nach Anspruch 7 oder 8, **dadurch gekennzeichnet, dass** zwei oder mehr Arrays (12, 12') sichtbares monochromes Licht mit jeweils verschiedenen Wellenlängen emittieren, die zusammen Weißlicht ergeben.

10. Fahrzeugscheinwerfer nach einem der vorhergehenden Ansprüche, **dadurch gekennzeichnet, dass** im Lichtweg der Lichtbündel (6) einiger oder aller Leuchtelemente (4) ein Diffuser (10) zum Spreizen der Lichtbündel angeordnet ist.

11. Fahrzeugscheinwerfer nach Anspruch 10, **dadurch gekennzeichnet, dass** der Diffuser (10) nahe an der Sammellinse (8) auf deren Lichtaustrittseite angeordnet ist.

12. Fahrzeugscheinwerfer nach Anspruch 10, **dadurch gekennzeichnet, dass** der Diffuser (10) in die Sammellinse (8) integriert ist.

13. Fahrzeugscheinwerfer nach einem der vorhergehenden Ansprüche, **dadurch gekennzeichnet, dass** die Ansteuerelektronik dafür eingerichtet ist, die Leuchtelemente (4), die leuchten gelassen werden, in Abhängigkeit von sensorisch gewonnenen Daten über Fahrbetriebs- oder Umgebungsbedingungen auszuwählen.

14. Fahrzeugscheinwerfer nach einem der vorhergehenden Ansprüche, **dadurch gekennzeichnet, dass** die Ansteuerelektronik dafür eingerichtet ist, für einige oder alle Leuchtelemente (4) Leuchtstärken einzustellen, die kleiner oder größer als die normale Leuchtstärke der Leuchtelemente sind.

15. Fahrzeugscheinwerfer nach einem der vorhergehenden Ansprüche, **dadurch gekennzeichnet, dass** er ein Frontscheinwerfer ist.

## Claims

1. Vehicle headlamp comprising a two-dimensional array (2) consisting of a plurality of electronic luminous elements (4), and an electronic control unit for said luminous elements which is configured to permit said luminous elements (4) to be lit individually or in selected groups, said luminous elements (4) being configured to emit a plurality of parallel luminous beams (6), the vehicle headlamp comprising a convergent lens (8) which is positioned essentially parallel to and the distance of its focal length away from the surface of the array in order to receive the light from the array.

2. Vehicle headlamp in accordance with claim 1,
**characterised in that**
the luminous elements (4) emit infrared light.

3. Vehicle headlamp in accordance with claim 1,
**characterised in that**
the luminous elements (4) emit visible light.

4. Vehicle headlamp in accordance with claim 1,
**characterised in that**
certain of the luminous elements (4) emit infrared light while the remaining luminous elements (4) emit visible light.

5. Vehicle headlamp in accordance with one of the preceding claims,
**characterised in that**
the luminous elements (4) are laser diodes.

6. Vehicle headlamp in accordance with one of claims 1 to 4,
**characterised in that**
the luminous elements (4) are LEDs.

7. Vehicle headlamp comprising a two-dimensional array (2) consisting of a plurality of electronic luminous elements (4), and an electronic control unit for said luminous elements which is configured to permit said luminous elements (14, 14') to be lighted individually or in selected groups, said vehicle headlamp containing at least one further two-dimensional array (12, 12') which is separated spatially from the first two-dimensional array, the various arrays (12, 12') each comprising a plurality of electronic luminous elements (14, 14') which are configured to emit a plurality of parallel luminous beams (16, 16'), the light sent out by each array having a wave length which is different from that/those of the light of the other array/s, and the various arrays being positioned such that their particular light beams meet in a beam combiner (20) which directs the light beams of all the arrays in parallel to a common convergent lens (18).

8. Vehicle headlamp in accordance with claim 7,
**characterised in that**
one of the arrays (12) emits infrared light while the remaining arrays (12') emit visible light.

9. Vehicle headlamp in accordance with claim 7 or 8,
**characterised in that**
two or more arrays (12, 12') emit visible monochrome light with different wave lengths which together produce white light.

10. Vehicle headlamp in accordance with one of the preceding claims,
**characterised in that**
positioned in the light path of the light beam (6) of certain or all of the luminous elements (4) is a diffuser (10) for spreading the light beam.

11. Vehicle headlamp in accordance with claim 10,
**characterised in that**
the diffuser (10) is positioned close to the convergent lens (10) on its light emitting side.

12. Vehicle headlamp in accordance with claim 10,
**characterised in that**
the diffuser (10) is integrated into the convergent lens (8).

13. Vehicle headlamp in accordance with one of the preceding claims,
**characterised in that**
the electronic control unit is configured to select the luminous elements (4) which are left lit dependent on driving and environmental data obtained by sensor.

14. Vehicle headlamp in accordance with one of the preceding claims,
**characterised in that**
for certain or all luminous elements (4) the electronic control unit is configured to set luminosities which are less than or greater than the normal luminosity of the luminous elements.

15. Vehicle headlamp in accordance with one of the preceding claims,
**characterised in that**
it is a front headlamp.

## Revendications

1. Phare de véhicule, comportant une série d'éléments (2) bidimensionnelle, formée par une pluralité d'éléments lumineux (4) électroniques, et une électronique de commande pour les éléments lumineux, qui est conçue pour allumer de manière sélective les éléments lumineux (4) isolément ou par groupes, les éléments lumineux (4) étant conçus pour émettre une pluralité de faisceaux lumineux (6) parallèles entre eux, le phare de véhicule contenant une lentille de convergence (8) qui, à distance de sa focale, est disposée sensiblement parallèlement à la surface de la série d'éléments, afin de recevoir la lumière émise par la série d'éléments.

2. Phare de véhicule selon la revendication 1, **caractérisé en ce que** les éléments lumineux (4) émettent de la lumière infrarouge.

3. Phare de véhicule selon la revendication 1, **caractérisé en ce que** les éléments lumineux (4) émettent de la lumière visible.

4. Phare de véhicule selon la revendication 1, **caractérisé en ce que** certains des éléments lumineux (4) émettent de la lumière infrarouge et les autres éléments lumineux émettent de la lumière visible.

5. Phare de véhicule selon l'une quelconque des revendications précédentes, **caractérisé en ce que** les éléments lumineux (4) sont des diodes laser.

6. Phare de véhicule selon l'une quelconque des revendications 1 à 4, **caractérisé en ce que** les éléments lumineux (4) sont des diodes électroluminescentes (DEL).

7. Phare de véhicule, comportant une série d'éléments (2) bidimensionnelle, formée par une pluralité d'éléments lumineux (4) électroniques, et une électronique de commande pour les éléments lumineux, qui est conçue pour allumer de manière sélective les, éléments lumineux (14, 14') isolément ou par groupes,
◆ le phare de véhicule comportant au moins une autre série d'éléments (12, 12') bidimensionnelle, séparée spacialement de la première série d'éléments bidimensionnelle,
◆ les plusieurs séries d'éléments comportant chacune une pluralité d'éléments lumineux (14, 14') électroniques conçus pour émettre une pluralité de faisceaux lumineux (16, 16') parallèles entre eux,
◆ la lumière émise par chaque série d'éléments ayant une longueur d'onde différente de celle de la lumière ou de l'autre série d'éléments,
◆ et les plusieurs séries d'éléments étant disposées de telle sorte que chacun de leurs faisceaux lumineux entrent dans un combineur de rayons (20), qui dirige les faisceaux lumineux de toutes les séries d'éléments parallèlement sur une lentille de convergence (18) commune.

8. Phare de véhicule selon la revendication 7, **caractérisé en ce que** l'une des séries d'éléments (12) émet de la lumière infrarouge et **en ce que** les autres séries d'éléments (12') émettent de la lumière visible.

9. Phare de véhicule selon la revendication 7 ou 8, **caractérisé en ce que** deux séries d'éléments (12, 12') ou plus émettent une lumière monochrome visible ayant respectivement des longueurs d'ondes différentes, qui forment conjointement une lumière blanche.

10. Phare de véhicule selon l'une quelconque des revendications précédentes, **caractérisé en ce que** dans le trajet lumineux des faisceaux lumineux (6) de certains ou de tous les éléments lumineux (4) est disposé un diffuseur (10) pour élargir le faisceau lumineux.

11. Phare de véhicule selon la revendication 10, **caractérisé en ce que** le diffuseur (10) est disposé à proximité de la lentille de convergence (8) sur le côté de sortie de lumière de celle-ci.

12. Phare de véhicule selon la revendication 10, **caractérisé en ce que** le diffuseur (10) est intégré dans la lentille de convergence (8).

13. Phare de véhicule selon l'une quelconque des revendications précédentes, **caractérisé en ce que** l'électronique de commande est conçue pour sélectionner les éléments lumineux (4) qui doivent être allumés, en fonction de données enregistrées par analyse sensorielle et relatives aux conditions de conduite et aux conditions environnantes.

14. Phare de véhicule selon l'une quelconque des revendications précédentes, **caractérisé en ce que** l'électronique de commande est conçue pour régler la luminosité de certains ou de tous les éléments lumineux (4), laquelle est inférieure ou supérieure à la luminosité normale des éléments lumineux.

15. Phare de véhicule selon l'une quelconque des revendications précédentes, **caractérisé en ce qu'**il s'agit d'un phare avant.
